# EUROPÄISCHE PATENTSCHRIFT

(11) **EP 2 193 585 B1**
(45) Veröffentlichungstag und Bekanntmachung des Hinweises auf die Patenterteilung: **27.11.2013**
(21) Anmeldenummer: 08801750.4
(22) Anmeldetag: 29.08.2008
(51) Int. Cl.: H02H 7/085

(54) **VERSTELLEINRICHTUNG**
ADJUSTMENT DEVICE
DISPOSITIF DE RÉGLAGE

(30) Priorität: 20.09.2007 DE 202007013225 U
(43) Veröffentlichungstag der Anmeldung: 09.06.2010
(73) Patentinhaber: Brose Fahrzeugteile GmbH & Co., 96130 Hallstadt (DE)
(72) Erfinder: BUHLHELLER, Jürgen, 97478 Hainert (DE); RUSS, Detlef, 96237 Ebersdorf (DE); HÜBNER, Ralf, 95488 Eckersdorf (DE); KROMER, Alex, 96135 Stegaurach (DE)
(74) Vertreter: FDST Patentanwälte
(86) Internationale Anmeldenummer: PCT/EP2008/007070
(87) Internationale Veröffentlichungsnummer: WO 2009/039936

(56) Entgegenhaltungen:
- EP-A- 1 637 682
- DE-C2- 19 710 338

## Beschreibung

Die Erfindung betrifft ein Verfahren zum Verstellen eines Stellelements eines motorisch angetriebenen Stellelements, insbesondere eines Kraftfahrzeugs. Die Erfindung betrifft weiter eine Verstelleinrichtung zur Durchführung der Verstellung.

Unter einem Stellelement eines Kraftfahrzeugs wird vorliegend jedes in einem Kraftfahrzeug beweglich angeordnete Element verstanden, welches von einem Motor gegenüber einem feststehenden Teil des Kraftfahrzeugs, wie insbesondere der Karosserie, verfahren, bewegt, geöffnet oder geschlossen werden kann. Ein derartiges Stellelement ist beispielsweise eine Seitenscheibe, ein Schiebedach, eine elektrisch betätigbare Tür oder eine Heckklappe. Auch ein elektrisch betätigbarer Kraftfahrzeugsitz stellt ein derartiges Stellelement dar.

Gerät ein Hindernis in den Stellweg eines derart angetriebenen Stellelements, so muss aus Sicherheitsgründen ein Einklemmen dieses Hindernisses verhindert werden. Die Drehmomente der verwendeten Antriebe sind nämlich groß genug, um im Falle des Einklemmens eines Körperteiles ernsthafte Verletzungen zu verursachen.

Aus diesem Grund ist in einem modernen Kraftfahrzeug einem Gefährdungsbereich eines verstellbaren Stellelements in der Regel ein Einklemmschutzsystem zum rechtzeitigen Erkennen eines Hindernisses, insbesondere eines menschlichen Körperteils, zugeordnet, so dass ein Einklemmfall rechtzeitig festgestellt und beispielsweise durch ein Stoppen oder Reversieren des Antriebs eine entsprechende Gegenmaßnahmen eingeleitet wird.

Aus der DE 10 2005 000 753 A1 ist es hierzu bekannt, stellwegsabhängig den Wert eines die Belastung des Motors charakterisierenden Betriebsparameters zu erfassen, den jeweils aktuellen Wert des Betriebsparameters mit jeweils einem dem Stellweg zugeordneten, vorgegebenen Schwellwert zu vergleichen und bei Über- oder Unterschreiten des Schwellwerts durch den jeweils aktuellen Wert des Betriebsparameters den Motor abzuschalten und/ oder reversierend anzutreiben. Mit anderen Worten wird entlang dem Stellweg aus einer unvorhergesehenen Änderung eines Betriebsparameters des Motors, z. B. der Drehzahl, des Drehmoments oder des Motorstroms, auf einen Einklemmfall zu schließen.

In der DE 197 19 338 C2 wird ein Verfahren angegeben, wobei zur Gewährleistung eines Einklemmschutzes das Anlaufverhalten einer Schließvorrichtung hinsichtlich des Ausgleichs des Antriebsspiels und hinsichtlich der Schwergängigkeit bestimmt wird. Insbesondere wird hierzu der stellwegsabhängige Verlauf des Motorstroms als Betriebsparameter erfasst.

Dabei wird berücksichtigt, dass insbesondere in der Anlaufphase eines Stellvorgangs des Stellelements, d.h. in der Phase nach dem Einschalten des Motors, und insbesondere bei einem Schließvorgang, der unmittelbar auf einen Öffnungsvorgang folgt, zunächst ein Ausgleich eines Antriebsspiels, ein sog. "Spielausgleich", erfolgt, wobei die mechanischen Komponenten der Motor-/Getriebeanordnung verspannt werden. Diese Anlaufphase des Motors endet, wenn das Antriebsspiel aufgebraucht ist, und das Stellelement als Last bewegt wird. Aufgrund der in der Anlaufphase schwankenden Motorströme kann nur schwierig zwischen einer Lastzunahme nach erfolgtem Spielausgleich und einem Einklemmfall unterschieden werden. Dadurch kann es in der Anlaufphase des Stellvorgangs unerwünschterweise zu einer Fehlsteuerung des Stellelements kommen, beispielsweise zu einem Fehlreversieren des Antriebs, obwohl kein Einklemmfall vorliegt. Gemäß der DE 197 10 338 C wird dieses Problem dadurch gelöst, dass nach Erreichen eines stellwegsabhängigen Aktivierungswertes der Einklemmschutz aktiviert und der weitere Verlauf des Betriebsparameters bis zum Erreichen einer gleichförmigen Bewegung unter Berücksichtigung vorangegangener Messwerte und davon abhängig der Schwellwert vorgegeben wird.

Aus der EP 16 37 682 A1 ist es weiter bekannt, zur Vermeidung einer Fehlsteuerung des Stellelements während einer Anlaufphase mit Spielausgleich einen Maximalwert (Peak) in der Drehzahl des Motors zu detektieren, zu dem Detektionszeitpunkt eine Zeitspanne T2 zu addieren, und erst bei Erreichen des Endes der Zeitspanne T2 die Detektion eines Einklemmfalles zu aktivieren. Die Zeitspanne T2 ist abhängig von der Größe des Spielausgleichs. Die Größe des Spielausgleichs wird durch eine entsprechende Erfassungseinrichtung anhand Drehzahlabweichungen während eines Startvorgangs ermittelt.

Ausgehend vom Stand der Technik liegt der Erfindung die Aufgabe zugrunde, ein alternative Verfahren zum Verstellen eines motorisch angetriebenen Stellelements, insbesondere eines Kraftfahrzeugs, anzugeben, bei dem insbesondere in der Anlaufphase eine Fehlsteuerung des Stellelements hinsichtlich einer Einklemmfallerkennung möglichst vermieden wird. Eine weitere Aufgabe besteht darin, eine hierzu entsprechend geeignete Vorrichtung anzugeben.

Die auf ein Verfahren gerichtete Aufgabe wird erfindungsgemäß gelöst durch ein Verfahren mit den Merkmalen des Patentanspruchs 1.

Demgemäß wird in einer Anlaufphase nach dem Einschalten des Motors der Verlauf eines die Belastung des Motors charakterisierenden Betriebsparameters in Abhängigkeit eines den Stellweg des Stellelements charakterisierenden Stellparameters erfasst, wobei aus dem Verlauf des Betriebsparameters auf einen Extremwert geschlossen wird. Aus dem dem Extremwert zugeordneten Wert des Stellparameters wird eine Länge der Beschleunigungsphase des Motors ermittelt, aus der Länge der Beschleunigungsphase auf die Länge der Abbremsphase geschlossen und ein Einschaltwert des Stellparameters, der das Ende der Abbremsphase angibt, vorhergesagt und erst bei Erreichen des Einschaltwertes wird der weitere Verlauf des Betriebsparameters auf das Vorliegen eines Einklemmfalles überprüft.

Die Erfindung geht dabei von der Erkenntnis aus, dass es insbesondere während einer motorischen Verstellung des Stellelements in einer Anlaufphase zu Belastungsschwankungen des Motors aufgrund des mechanischen Spielausgleichs kommt. Im Rahmen eines Einklemmschutzsystems, der eine unerwartete Belastungsänderung als einen Einklemmfall interpretiert, kann es hierdurch zu einer unerwünschten Fehlsteuerung des Stellelements kommen.

Die Erfindung geht weiter von der überlegung aus, dass ein mechanisches Antriebsystem aus Stellelement/Getriebe/Motor insbesondere nach einem Einschaltvorgang wie eine Feder/Masse-Anordnung betrachtet werden kann und insofern in der Anlaufphase aus dem Wechsel zwischen Spielausgleich und Beschleunigung des Stellelements ein Schwingungsverhalten zeigt, bis ein Gleichgewichtszustand erreicht ist, in dem bei konstanter Motorspannung der Motor stationär läuft und das Stellelement mit konstanter Geschwindigkeit bewegt wird.

Weiter erkennt nun die Erfindung, dass gerade aus solche Schwingungen die Ursache für die mittels des Betriebsparameters beobachtbaren Belastungsschwankungen sind, aus denen ein herkömmliches Einklemmschutzsystem oftmals irrtümlich auf einen Einklemmfall schließt.

Schließlich realisiert die Erfindung, dass ein Fehlsteuern des Stellelements vermieden werden kann, wenn das Einklemmschutzsystem erst dann aktiviert wird, wenn die Schwingung nach einem Einschaltvorgang abgeklungen ist. Hierzu geht die Erfindung davon aus, dass sich aus der Beschleunigungsphase des Motors, während der das mechanische Spiel aufgebraucht wird, und der der Motor bis zu einer Leerlaufdrehzahl beschleunigt wird, die Länge der Abbremsphase, in der das Stellelement ergriffen und schließlich mit konstanter Geschwindigkeit angetrieben wird, ermitteln lässt. Denn sowohl die Beschleunigungsphase als auch die Abbremsphase aufgrund einer konstanten Last sind - eine konstante Motorspannung vorausgesetzt - im Wesentlichen abhängig von der Trägheit desselben Motors.

Untersuchungen haben bestätigt, dass aus der Länge der Beschleunigungsphase des Motors, insbesondere bei einem Spielausgleich, auf die Länge der Abbremsphase und den während dieser Phase zurückgelegten Stellweg des Stellelements, geschlossen werden kann.

Wird somit das Ende der Beschleunigungsphase mittels eines Extremwerts des stellwegsabhängigen Belastungsverlaufs des Motors ermittelt, und aus dessen stellwegsbezogener Position auf einen Einschaltwert, der das Ende der Abbremsphase bzw. des Schwingungsverhaltens angibt, geschlossen, kann eine unerwünschte Fehlsteuerung des Stellelements aufgrund Belastungsschwankungen, z. B. aufgrund mechanischer Schwingungen, die während der Abbremsphase auftreten, vermieden werden. Der Einklemmschutz wird erst bei Erreichen des vorhergesagten Einschaltwertes aktiviert.

Der Extremwert ist, je nach konkreter Wahl des Betriebsparameter, entweder ein Maximum oder ein Minimum.

Die stellwegabhängige Länge der Abbremsphase, das heißt die Länge des Abszissen-Abschnitts des Verlaufs des Betriebsparameters, ist abhängig von der Lage des Extremwerts in Bezug auf den Stellparameter und wird mit dem Einschaltwert vorhergesagt, der sich dementsprechend aus der Position des Extremwerts ableiten lässt.

Der Einschaltwerts wird so gewählt, dass bei Erreichen des Einschaltwertes der Gleichgewichtszustand erreicht und die Schwingungsphase abgeschlossen ist. Erst bei Erreichen des Gleichgewichtszustandes wird der weitere Verlauf des Betriebsparameters auf das Vorliegen eines Einklemmfalls überprüft. Eine Belastungsschwankung, die in dieser Phase auftritt und zu einem Überschreiten eines vorgegebenen Auslöseschwellwerts durch den erfassten Betriebsparameter führt, ist in der Regel auf einen tatsächlichen Einklemmfall zurückzuführen, so dass eine Fehlerkennung und eine Fehlsteuerung des Stellelements vermieden wird.

Als Betriebsparameter, der die Belastung des Motors während eines Stellvorgangs charakterisiert, wird beispielsweise der Motorstrom erfasst. Alternativ wird beispielsweise ein lastabhängiger Drehparameter erfasst, wie beispielsweise die Winkelgeschwindigkeit oder Drehzahl oder ein hiervon ableitbares Drehmoment des Motors.

Zweckmäßigerweise wird als Betriebsparameter die Drehzahl des Motors erfasst. Die Drehzahl des Motors gibt die Anzahl der Umdrehungen des Motors pro Zeit an. Die Drehzahl nimmt mit einer steigenden Belastung des Motors ab, so dass der Extremwert des Verlaufs als ein Maximum gegeben ist. Die Erfassung der Drehzahl ist vorteilhaft, da zur Drehzahlbestimmung auf technisch ausgereifte Drehgeber zurückgegriffen werden kann.

In einer bevorzugten Ausgestaltung der Erfindung wird der Verlauf des Betriebsparameters in Abhängigkeit der Anzahl der Umdrehungen des Motors erfasst. Das heißt, als der den Stellweg des Stellelements charakterisierende Stellparameter wird die Anzahl der Umdrehungen des Motors erfasst. Aus diesem Stellparameter kann zugleich die Drehzahl als Betriebsparameter abgeleitet werden. Damit ist zur Erfassung des Betriebsparameters und zur Erfassung des Stellparameters nur ein einziges Sensormittel erforderlich. Für eine direkte Erfassung des Stellwegs sind hingegen weitere und insbesondere teuere Sensoren wie Positionssensoren oder Abstandssensoren erforderlich.

Vorzugsweise wird auf den Extremwert durch einen inkrementellen Vergleich der in einem zeitlichen Abstand erfassten Betriebsparameter geschlossen. Konkret heißt das, dass die Differenz zweier aufeinander folgender Meßwerte des Betriebsparameters beobachtet und auf das Erreichen des Extremwerts geschlossen wird, wenn der Differenzwert gegen Null tendiert, also innerhalb eines vorgebaren Schwellbereichs liegt. Durch den inkrementellen Vergleich der Meßwerte kann die stellwegabhängige Lage des Extremwerts mittels diskreter Meßwerte angenähert werden, wie sie in der Regel vorliegen.

In einer vorteilhaften Ausgestaltung der Erfindung wird der Einschaltwert aus dem dem Extremwert zugeordneten Wert des Stellparameters mittels eines Proportionalitätsfaktors ermittelt. Es hat sich nämlich gezeigt, dass die Länge der Beschleunigungsphase des Motors und die Länge der Abbremsphase in einem annähernd konstanten Verhältnis stehen, also über einen Proportionalitätsfaktor miteinander verknüpfbar sind.

Vorzugsweise wird ein tatsächlich ermittelter Verlauf des Betriebsparameters zur Ermittlung des Einschaltwerts berücksichtigt. Dabei wird insbesondere der stellwegsabhängige Verlauf des Betriebsparameters aus einem vorhergehenden Stellvorgang berücksichtigt. Aus einem solchen Verlauf kann auf das Erreichen des Gleichgewichtszustands geschlossen werden. Insbesondere kann aus einem vorherigen Einschaltvorgang die Beziehung der Position des Extremwerts zum Einschaltwert ermittelt und hieraus gegebenenfalls der Proportionalitätsfaktor korrigiert werden. In dieser Ausführung der Erfindung ist deswegen eine Art Lernprozeß vorgesehen, in dem Veränderungen im Verlauf des Betriebsparameters bei der Ermittlung des Einschaltwerts berücksichtigt werden.

In einer weiter vorteilhaften Ausgestaltung der Erfindung wird der vorhergesagte Einschaltwert mittels des Steigungsverhaltens des Verlaufs überprüft und gegebenenfalls korrigiert. Das Ende der Schwingungsphase bzw. der Beginn der Gleichgewichtsphase ist nämlich dadurch gekennzeichnet, dass die Steigung im Verlauf des erfassten Betriebsparameters gegen Null tendiert. Dies ist sowohl nach dem Ende einer sich dem Spielausgleich anschließenden Abbremsphase, als auch bei einem Einschaltvorgang ohne Spielausgleich der Fall. In einer Anlaufphase eines Stellvorgangs ohne Spielausgleich beschleunigt nämlich der Motor nach dem Einschalten direkt bis zum Erreichen des Extremwerts unter Last. Der mittels des Extremwerts dann ermittelte Einschaltwert sagt in diesem Fall nicht den Beginn der Gleichgewichtsphase vorher, markiert also nicht den Übergang zwischen einer Abbrems- und der Gleichgewichtsphase, sondern liegt in der schon begonnen Gleichgewichtsphase des Verlaufs. Da die Gleichgewichtsphase im Gegensatz zu der Abbremsphase des Motors durch eine im Wesentlichen gegen Null gehende Steigung gekennzeichnet ist, ist eine Überprüfung und Korrektur des Einschaltwerts mittels des Steigungsverhaltens auf einfache Art möglich. Tritt ein Bereich einer konstanten Steigung Null vor Erreichen des Einschaltwertes auf, so kann bereits ab diesem Zeitpunkt der Einklemmschutz aktiviert werden.

Mittels des Steigungsverhaltens des Verlaufs ist es somit auch möglich, zu überprüfen, ob die Anlaufphase des aktuellen Stellvorgangs mit oder ohne Spielausgleich erfolgt.

Vorzugsweise erfolgt die Überprüfung des Verlaufs des Betriebsparameters auf das Vorliegen eines Einklemmfalles derart, dass ein Meßwert des Betriebsparameters mit einem vorgegebenen Auslöseschwellwert verglichen wird und bei einer Über- oder Unterschreitung des Auslöseschwellwerts durch den Meßwert der Motor angehalten und/oder reversierend angetrieben wird. In dieser Ausgestaltung wird aus einer Änderung des Betriebsparameters, beispielsweise der Drehzahl des Motors, auf einen Einklemmfall geschlossen. Insbesondere wird ein stellwegsabhängiger Verlauf des Auslöseschwellwerts vorgegeben, der natürliche Schwergängigkeiten bzw. Belastungsvariationen entlang dem Stellweg berücksichtigt, die beispielsweise durch mechanische Schwergängigkeiten bedingt sind, oder zum Erzielen hoher Klemmkräfte beim Schließen des Stellelements gegen die Karosserie gewollt vorgegeben sind.

Die auf eine Vorrichtung gerichtete Aufgabe wird erfindungsgemäß gelöst durch die Merkmale des auf eine Verstelleinrichtung gerichteten Patentanspruchs. Demnach umfasst die Verstelleinrichtung ein Stellelement, einen Motor zum Antrieb des Stellelements, ein Sensormittel zur Erfassung des Verlaufs eines die Belastung des Motors charakterisierenden Betriebsparameters und eine Steuereinheit, die mit dem Motor und dem Sensormittel verbundenen ist, wobei die Steuereinheit zur Durchführung des vorbeschriebenen Verfahrens ausgebildet ist.

Weitere vorteilhafte Ausführungen finden sich in den auf die Vorrichtung rückbezogenen Unteransprüche. Dabei können die für das Verfahren geschilderten Vorteile sinngemäß auf die Vorrichtung übertragen werden.

Mit dem Sensormittel wird insbesondere der Verlauf des Betriebsparameters in Abhängigkeit von dem Stellparameter erfasst. Ein derartiges Sensormittel kann optischer, akustischer, magnetischer oder elektromagnetischer Bauart sein und zur Erfassung eines Drehparameters z. B. der Antriebsachse oder einer weiteren vom Motor getriebenen Achse zugeordnet sein. Vorzugsweise ist das Sensormittel ein Hallsensor. Die Verwendung eines Hallsensor bietet sich insbesondere auch deshalb an, da er im Kraftfahrzeugbereich als ein bewährter und robuster Sensor häufig zur Drehzahlbestimmung eines Antriebsmotors eingesetzt wird, so dass gegebenenfalls auf einen bereits vorhandenen Hallsensor zurückgegriffen werden kann.

Ein Ausführungsbeispiel der Erfindung wird anhand einer Zeichnung näher erläutert. Dabei zeigt in schematischer Darstellung:
- Fig. 1:: einen schließwegabhängigen Verlauf der Drehzahl eines Motors bei Betätigung einer Fensterscheibe in einer Anlaufphase mit Spielausgleich und
- Fig. 2:: schematisch eine Fahrzeugtür mit einer Verstelleinrichtung zum Verstellen einer elektrisch betätigbaren Fensterscheibe.

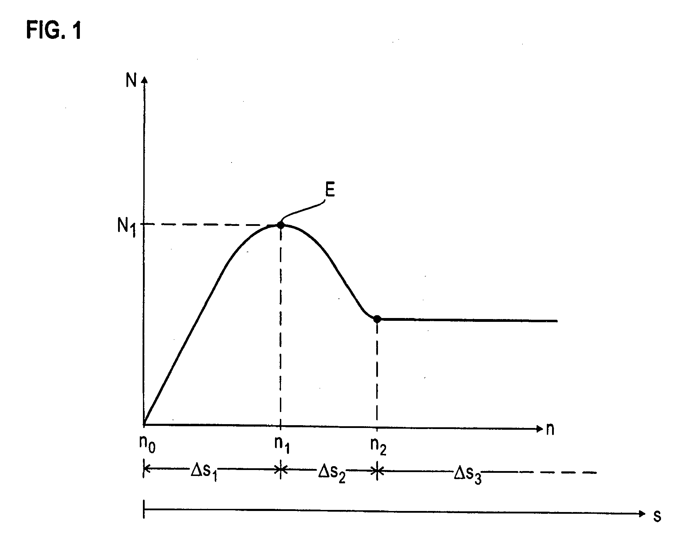

In Fig. 1 ist schematisch für die Anlaufphase eines Stellvorgangs eines Stellelements der Verlauf der Drehzahl N des antreibenden Motors in Abhängigkeit von der Anzahl n der Umdrehungen dargestellt. Die Drehzahl N ist dabei charakterisierend für die Belastung des Motors, während die Anzahl der Umdrehungen n ein Mass für den zurückgelegten Stellweg liefert. Antriebsbedingt kann nämlich einer bestimmten Anzahl n von Umdrehungen ein bestimmter zurückgelegter Stellweg s des Stellelements zugeordnet werden. In der Darstellung sind die Wegintervalle Δs₁, Δs₂ und Δs₃, die den Differenzen zwischen den Anzahlen n₀, n₁ bzw. n₂ der Umdrehungen entsprechen, zur Verdeutlichung mit eingezeichnet.

Wie aus Fig. 1 ersichtlich wird, lässt sich ein typischer Verlauf der Drehzahl N in Abhängigkeit von der Anzahl n der Umdrehungen in der Anlaufphase eines Stellvorgangs in drei signifikante Bereiche unterteilen.

In einer Beschleunigungsphase im Wegintervall Δs₁ erfolgt zunächst ein Spielausgleich in den mechanischen Komponenten, wobei der Motor nahezu ohne Last bis zu einer Leerlaufdrehzahl N₁.

Nach Erreichen des durch die Leerlaufdrehzahl N₁ charakterisierten Extremwerts (E) wird in einer Abbremsphase im Wegintervall Δs₂ nach erfolgtem Spielausgleich die Fensterscheibe als Last ergriffen und beschleunigt. Durch die erhöhte Last wird der Motor selber abgebremst. Die Drehzahl N nimmt ab. Während der Abbremsphase kommt es zu Schwingungen des gekoppelten Systems aus Fensterscheibe, Getriebe und Motor, d.h. zu einem Wechsel zwischen Beschleunigungen und Abbremsungen des Motors. Infolgedessen schwankt die erfasste Drehzahl N deutlich, was aus Gründen der Übersichtlichkeit nicht eingezeichnet ist. Insbesondere unterscheiden sich diese Drehzahlschwingungen von Anlaufphase zu Anlaufphase und sind insbesondere bei verschiedenen System unterschiedlich. Durch derartige Schwankungen kann es bei herkömmlichen Systemen leicht zu einer Fehlauslösung eines Einklemmschutzsystems kommen, d. h. das Einklemmschutzsystem wertet die Belastungsschwankungen fälschlicherweise als Einklemmfall.

Während der Abbremsphase nehmen die Werte für die Drehzahl N so lange ab bis eine Gleichgewichtsphase im Wegintervall Δs₃ erreicht ist. Der Abschluß der Abbremsphase, bzw. der Beginn der Gleichgewichtsphase wird durch den Einschaltwert n₂ gekennzeichnet. Nach Erreichen des Einschaltwerts n₂, d.h. in der Gleichgewichtsphase, wird die Fensterscheibe mit annähernd konstanter Geschwindigkeit bewegt, d. h. der Motor hat einen stationären Lauf erreicht und läuft ohne Belastungsschwankungen bzw. nur mit solchen Belastungsschwankungen die aufgrund vorhandener und berücksichtigbarer Schwergängigkeiten gegeben sind.

Umfangreiche Untersuchungen haben nun ergeben, dass das Verhältnis Δs₁/Δs₂ nahezu konstant ist, d. h. die Länge der Beschleunigungsphase ist mit der Länge der Abbremsphase korreliert. Der Einschaltwert n₂ wird unter Berücksichtigung der Startposition mittels eines Proportionalitätsfaktors aus dem dem Extremwert E zugeordneten Wert der Anzahl der Umdrehungen n₁ berechnet.

Somit wird aus dem beginnenden Verlauf der Drehzahl N bei einem Einschaltvorgang des Stellelements auf das Ende der Abbremsphase geschlossen. Erst nach Erreichen des durch n₂ charakterisierten Stellwegs wird ein Einklemmschutzsystem aktiviert. Zu diesem Zeitpunkt sind keine durch das Anlaufverhalten bedingte Belastungsschwankungen des Motors mehr zu erwarten.

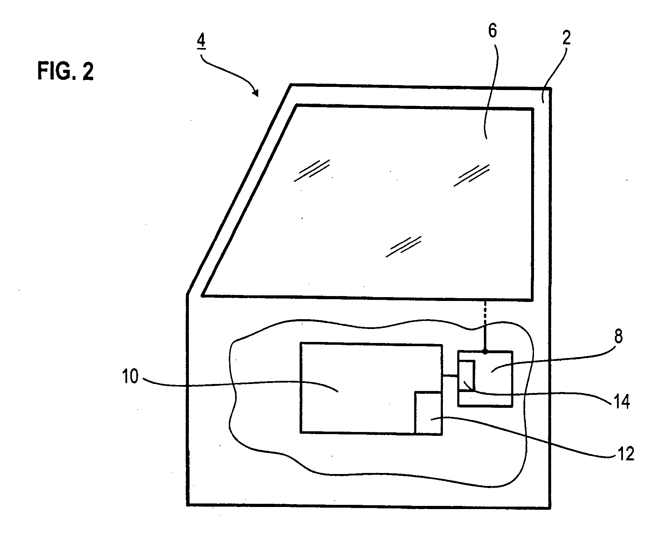

In Fig. 2 ist schematisch eine Fahrzeugtür 2 mit einer Verstelleinrichtung 4 für eine elektrisch verstellbare Fensterscheibe 6 dargestellt. Die Verstelleinrichtung 4 umfasst einen Motor 8 und ein als Fensterscheibe 6 gegebenes, von dem Motor 8 betätigbares, Stellement, sowie eine Steuereinheit 10.

Mittels der Steuereinheit 10 wird der Belastungsverlauf des Motors 8 nach dessen Einschalten dahingehend ausgewertet, dass eine Einklemmfallerkennung erst nach dem Abschluß der erwarteten Abbremsphase gemäß Fig. 1 aktiviert wird, so dass Belastungsschwankungen während der Anlaufphase des Stellvorgang nicht zu einer Fehlsteuerung des Motors 8 führen. Hierzu ist ein Mikrocontroller 12 vorgesehen.

Die Verstelleinrichtung 4 umfasst weiter zur Erfassung der Drehzahl N des Motors als einen lastabhängigen Parameter einen einer Welle des Motors 8 zugeordneten Hallsensor 14. Der Hallsensor 14 umfasst einen auf der Welle des Motors 8 angeordneten Ringmagneten, der aus einer Anzahl von Dauermagneten derart zusammengesetzt ist, dass sich Nord- und Südpole in Umfangsrichtung abwechseln. Aus der Frequenz des einer Hall-Spannung entsprechenden Sensorsignals des Hallsensors 14 kann daher die Steuereinheit 10 auf die Drehzahl N und die absolute Anzahl der Umdrehungen n des Motors 8 zurückrechnen. Die Drehzahl N als ein Betriebsparameter ist dabei charakterisierend für die Belastung des Motors 8, während die Anzahl n der Umdrehungen den zurückgelegten Stellweg liefert. Somit kann der Belastungsverlauf allein aus dem Sensorsignal des Hallsensors 14 ermittelt werden. Die Sensorsignale werden hierbei getaktet, d.h. diskontinuierlich erfasst.

Zur Ermittlung des Extremwerts E im stellwegsabhängigen Verlauf der Drehzahl N berechnet die Steuereinheit 10 die Differenz der aus den Sensorsignalen des Hallsensors 14 ermittelten, einzelnen Werte für die Drehzahl N. Je näher sich der Verlauf einem Extremwert E nähert, desto kleiner werden die Differenzwerte. Liegt der ermittelte Differenzwert unterhalb eines parametrisierbaren Schwellwerts, so berechnet die Steuereinheit 10 den Einschaltwert n₂ mittels eines Proportionalitätsfaktors aus der Anzahl n₁ der seit dem Beginn bei n₀ zurückgelegten Umdrehungen des Motors. Für den Wert des Proportionalitätsfaktors werden langfristig gemittelte und erlernte Werte berücksichtigt, die mittels vorangehender Anlaufsituationen ermittelt wurden.

Der Einschaltwert n₂ sagt den zurückgelegten Stellweg s bzw. die Anzahl der Umdrehungen n des Motors 8 bis zum Erreichen der Gleichgewichtsphase des Motors 8 vorher. Erst bei Erreichen des Einschaltwerts n₂ wird das Einklemmschutzsystem aktiviert. Zur Überprüfung des ermittelten Einschaltwerts n₂ berechnet die Steuereinheit 10 laufend die Differenzwerte der ermittelten Meßwerte für die Drehzahl N. Gehen die Differenzwerte innerhalb eines vorgebbaren Schwankungsbereichs gegen Null, bevor der durch den Einschaltwert n₂ vorhergesagte Stellweg s zurückgelegt wurde, löst die Steuereinheit 10 bereits an dieser Position eine Aktivierung der Einklemmfallerkennung aus. Ein derartiger Fall kann beispielsweise auftreten, falls die Anlaufphase des aktuellen Stellvorgangs ohne Spielausgleich erfolgt, beispielsweise bei einem wiederholten Antrieb ohne Richtungsumkehr. In diesem Fall sind die mechanischen Komponenten der Motor-/Getriebeanordnung vorgespannt, so dass kein Antriebsspiel vorhanden ist. In diesem Fall beschleunigt der Motor 8 direkt in die Gleichgewichtsphase.

Andernfalls löst die Steuereinheit 10 eine Aktivierung der Einklemmfallerkennungseinheit 12 erst aus, wenn der durch den Einschaltwert n₂ vorhergesagte Stellweg s zurückgelegt wurde, bzw. der Motor 8 die vorhergesagte Anzahl von Drehungen n ausgeführt hat.

Zur Detektion eines Einklemmfalles im Stellweg der Fensterscheibe 6 vergleicht die Steuereinheit 10 laufend den aktuellen Meßwert der Motordrehzahl N mit einem entlang dem Stellweg s vorgegebenen Auslöseschwellwert. Unterschreitet der aktuelle Meßwert der Motordrehzahl N den Auslöseschwellwert, so wird ein Einklemmfall detektiert. Die Steuereinheit 10 stoppt daraufhin den Motor 8 und treibt ihn reversierend an.

### Bezugszeichenliste

- 2: Fahrzeugtür
- 4: Verstelleinrichtung
- 6: Fensterscheibe
- 8: Motor
- 10: Steuereinheit
- 12: Mikrocontroller
- 14: Hallsensor

- E: Extremwert
- N: Drehzahl
- n: Anzahl der Umdrehungen
- n₁: Umdrehung am Extremwert
- N₁: Maximalwert
- n₂: Einschaltwert
- s: Stellweg

## Patentansprüche

1. Verfahren zum Verstellen eines motorisch angetriebenen Stellelements (6), insbesondere eines Kraftfahrzeugs,
wobei
- in einer Anlaufphase nach dem Einschalten des Motors (8) der Verlauf eines die Belastung des Motors (8) charakterisierenden Betriebsparameters in Abhängigkeit eines den Stellweg (s) des Stellelements (6) charakterisierenden Stellparameters erfasst wird,
- aus dem Verlauf des Betriebsparameters auf einen Extremwert (E) geschlossen wird,
- aus dem dem Extremwert (E) zugeordneten Wert (n₁) des Stellparameters eine Länge der Beschleunigungsphase des Motors (8) ermittelt, aus der Länge der Beschleunigungsphase auf die Länge der Abbremsphase geschlossen und ein Einschaltwert (n₂) des Stellparameters, der das Ende der Abbremsphase angibt, vorhergesagt wird und
- erst bei Erreichen des Einschaltwertes (n₂) der weitere Verlauf des Betriebsparameters auf das Vorliegen eines Einklemmfalles überprüft wird.

2. Verfahren nach Anspruch 1,
wobei als Betriebsparameter eine Drehzahl (N) des Motors (8) erfasst wird.

3. Verfahren nach einem der vorhergehenden Ansprüche,
wobei der Verlauf des Betriebsparameters in Abhängigkeit der Anzahl der Umdrehungen (n) des Motors (8) erfasst wird.

4. Verfahren nach einem der vorhergehenden Ansprüche,
wobei auf den Extremwert (E) durch einen inkrementellen Vergleich der in einem zeitlichen Abstand erfassten Betriebsparameter geschlossen wird.

5. Verfahren nach einem der vorhergehenden Ansprüche,
wobei der Einschaltwert (n₂) aus dem dem Extremwert (E) zugeordneten Wert (n₁) des Stellparameters mittels eines Proportionalitätsfaktors ermittelt wird, der die Länge der Beschleunigungsphase mit der Länge der Abbremsphase, verknüpft.

6. Verfahren nach einem der vorhergehenden Ansprüche,
wobei ein tatsächlich ermittelter Verlauf des Betriebsparameters zur Ermittlung des Einschaltwerts (n₂) berücksichtigt wird.

7. Verfahren nach einem der vorhergehenden Ansprüche,
wobei der vorhergesagte Einschaltwert (n₂) mittels des Steigungsverhaltens des Verlaufs überprüft und gegebenenfalls korrigiert wird.

8. Verfahren nach einem der vorhergehenden Ansprüche,
wobei die Überprüfung des Verlaufs des Betriebsparameters auf das Vorliegen eines Einklemmfalles derart erfolgt, dass ein Meßwert des Betriebsparameters mit einem vorgegebenen Auslöseschwellwert verglichen wird und bei einer Über- oder Unterschreitung des Auslöseschwellwerts durch den Meßwert der Motor (8) angehalten und/oder reversierend angetrieben wird.

9. Verstelleinrichtung (4) zum Verstellen eines motorisch angetriebenen Stellelements (6), insbesondere eines Kraftfahrzeugs, mit einem Stellelement (6), mit einem mit dem Stellelement (6) verbundenen Motor (8), mit einem Sensormittel (14) zur Erfassung eines die Belastung des Motors (8) charakterisierenden Betriebsparameter und mit einer Steuereinheit (10), die mit dem Motor (8) und dem Sensormittel (14) verbundenen ist, wobei die Steuereinheit (10) dafür eingerichtet ist,
- in einer Anlaufphase nach dem Einschalten des Motors (8) den Verlauf des Betriebsparameters in Abhängigkeit eines den Stellweg (s) des Stellelements (6) charakterisierenden Stellparameters zu erfassen,
- aus dem Verlauf des Betriebsparameters auf einen Extremwert (E) zu schließen,
- aus dem dem Extremwert (E) zugeordneten Wert (n₁) des Stellparameters eine Länge der Beschleunigungsphase des Motors (8) zu ermitteln, aus der Länge der Beschleunigungsphase auf die Länge der Abbremsphase zu schließen, einen Einschaltwert (n₂) des Stellparameters, der das Ende der Abbremsphase angibt, vorherzusagen und
- erst bei Erreichen des Einschaltwertes (n₂) den weiteren Verlauf des Betriebsparameters auf das Vorliegen eines Einklemmfalles zu überprüfen.

10. Verstelleinrichtung (4) nach Anspruch 9,
wobei das Sensormittel (14) zur Erfassung der Drehzahl (N) des Motors (8) ausgebildet ist.

11. Verstelleinrichtung (4) nach Anspruch 9 oder 10,
wobei die Steuereinheit (10) dafür eingerichtet ist, auf den Extremwert (E) durch einen inkrementellen Vergleich der in einem zeitlichen Abstand erfassten Betriebsparameter zu schließen.

12. Verstelleinrichtung (4) nach einem der Ansprüche 9 bis 11,
wobei die Steuereinheit (10) dafür eingerichtet ist, den Einschaltwert (n₂) aus dem dem Extremwert (E) zugeordneten Wert (n₁) des Stellparameters mittels eines Proportionalitätsfaktors zu ermitteln, der die Länge der Beschleunigungsphase mit der Länge der Abbremsphase verknüpft.

13. Verstelleinrichtung (4) nach einem der Ansprüche 9 bis 12,
wobei die Steuereinheit (10) dafür eingerichtet ist, einen tatsächlich ermittelten Verlauf des Betriebsparameters zur Ermittlung des Einschaltwerts (n₂) zu berücksichtigen.

14. Verstelleinrichtung (4) nach einem der Ansprüche 9 bis 13,
wobei die Steuereinheit (10) dafür eingerichtet ist, den vorhergesagten Einschaltwert (n₂) mittels des Steigungsverhaltens des Verlaufs zu überprüfen und gegebenenfalls zu korrigieren.

## Claims

1. Method for adjusting a motor-driven actuator element (6), in particular of a motor vehicle,
wherein
- in a run-up phase after the motor (8) is switched on, the profile of an operating parameter which characterizes the load on the motor (8) is detected as a function of an actuation parameter which characterizes the actuation of travel (s) of the actuation element (6),
- an extreme value (E) is inferred from the profile of the operating parameter,
- a length of the acceleration phase of the motor (8) is determined from the value (n₁) of the actuation parameter assigned to the extreme value (E), the length of the braking phase is inferred from the length of the acceleration phase, and a switch-on value (n₂) of the actuation parameter, which specifies the end of the braking phase, is predicted, and
- the further profile of the operating parameter for the occurrence of a case of trapping is checked only when the switch-on value (n₂) is reached.

2. Method according to Claim.1,
wherein a rotational speed (N) of the motor (8) is detected as an operating parameter.

3. Method according to one of the preceding claims,
wherein the profile of the operating parameter is detected as a function of the number of revolutions (n) of the motor (8).

4. Method according to one of the preceding claims,
wherein the extreme value (E) is inferred through an incremental comparison of the operating parameters detected at a time interval.

5. Method according to one of the preceding claims,
wherein the switch-on value (n₂) is determined from the value (n₁), assigned to the extreme value (E), of the actuation parameter by means of a proportionality factor which links the length of the acceleration phase with the length of the braking phase.

6. Method according to one of the preceding claims,
wherein a profile of the operating parameter which is actually determined is taken into account in the determination of the switch-on value (n₂).

7. Method according to one of the preceding claims,
wherein the predicted switch-on value (n₂) is checked by means of the rise behaviour of the profile and, if appropriate, corrected.

8. Method according to one of the preceding claims,
wherein the checking of the profile of the operating parameter for the occurrence of a case of trapping is carried out in such a way that a measured value of the operating parameter is compared with a predefined triggering threshold value, and the motor (8) is stopped and/or is driven in reverse when the measured value exceeds or undershoots the triggering threshold value.

9. Adjustment device (4) for adjusting a motor-driven actuation element (6), in particular of a motor vehicle, having an actuation element (6), having a motor (8) which is connected to the actuation element (6), having a sensor means (14) for detecting an operating parameter which characterizes the load on the motor (8), and having a control unit (10) which is connected to the motor (8) and to the sensor means (14), wherein the control unit (10) is configured
- to detect, in a run-up phase after the switching on of the motor (8), the profile of the operating parameter as a function of an actuation parameter which characterizes the actuation travel (s) of the actuation element (6),
- to infer an extreme value (E) from the profile of the operating parameter,
- to determine a length of the acceleration phase of the motor from the value (n₁) of the actuation parameter which is assigned to the extreme value (E), to infer the length of the braking phase from the length of the acceleration phase, to predict a switch-on value (n₂) of the actuation parameter which specifies the end of the braking phase, and
- to check the further profile of the operating parameter for the occurrence of a case of trapping only when the switch-on value (n₂) is reached.

10. Adjustment device (4) according to Claim 9,
wherein the sensor means (14) is designed to detect the rotational speed (N) of the motor (8).

11. Adjustment device (4) according to Claim 9 or 10,
wherein the control unit (10) is configured to infer the extreme value (E) by means of an incremental comparison of the operating parameters detected in a time interval.

12. Adjustment device (4) according to one of Claims 9 to 11,
wherein the control unit (10) is configured to determine the switch-on value (n₂) from the value (n₁) assigned to the extreme value (E) of the actuation parameter by means of a proportionality factor which links the length of the acceleration phase to the length of the braking phase.

13. Adjustment device (4) according to one of Claims 9 to 12,
wherein the control unit (10) is configured to take into account an actually determined profile of the operating parameter in order to determine the switch-on value (n₂).

14. Adjustment device (4) according to one of Claims 9 to 13,
wherein the control unit (10) is configured to check the predicted switch-on value (n₂) by means of the rise behaviour of the profile and, if appropriate, correct it.

## Revendications

1. Procédé d'ajustement d'un élément de réglage (6) entraîné par moteur, en particulier dans un véhicule automobile, dans lequel :
dans une phase de démarrage, après le branchement du moteur (8), l'évolution d'un paramètre de fonctionnement qui caractérise la charge du moteur (8) est relevée en fonction d'un paramètre de réglage qui caractérise la course de réglage (S) de l'élément de réglage (6),
une valeur extrême (E) est déduite de l'évolution du paramètre de fonctionnement,
la longueur de la phase d'accélération du moteur (8) est déterminée à partir de la valeur (n₁) du paramètre de réglage associé à la valeur extrême (E), la longueur de la phase de freinage étant déduite de la longueur de la phase d'accélération et une valeur de branchement (n₂) du paramètre de réglage qui indique la fin de la phase de freinage étant prédite, et
la présence éventuelle d'une situation de blocage est vérifiée uniquement après que la valeur de branchement (n₂) de la suite de l'évolution du paramètre de fonctionnement a été atteinte.

2. Procédé selon la revendication 1, dans lequel le paramètre de fonctionnement relevé est la vitesse de rotation (N) du moteur (8).

3. Procédé selon l'une des revendications précédentes, dans lequel l'évolution du paramètre de fonctionnement est relevée en fonction du nombre des rotations (N) du moteur (8).

4. Procédé selon l'une des revendications précédentes, dans lequel la valeur extrême (E) est déduite par une comparaison incrémentielle des paramètres de fonctionnement relevés à intervalles de temps.

5. Procédé selon l'une des revendications précédentes, dans lequel la valeur de branchement (n₂) est déterminée à partir de la valeur (n₁) associée à la valeur extrême (E) du paramètre de réglage au moyen d'un facteur de proportionnalité qui relie la longueur de la phase d'accélération à la longueur de la phase de freinage.

6. Procédé selon l'une des revendications précédentes, dans lequel l'évolution effectivement relevée du paramètre de fonctionnement est prise en compte pour déterminer la valeur de branchement (n₂).

7. Procédé selon l'une des revendications précédentes, dans lequel la valeur de branchement (n₂) est vérifiée et éventuellement corrigée au moyen de la pente de l'évolution.

8. Procédé selon l'une des revendications précédentes, dans lequel la vérification de la présence éventuelle d'une situation de blocage dans l'évolution du paramètre de fonctionnement s'effectue en comparant une valeur de mesure du paramètre de fonctionnement à une valeur prédéterminée de seuil de déclenchement et dans lequel le moteur (8) est retenu et/ou entraîné en marche arrière lorsque la valeur de seuil de déclenchement est dépassée ou n'est pas atteinte par la valeur de mesure.

9. Dispositif d'ajustement (4) destiné à ajuster un élément de réglage (6) entraîné par moteur, en particulier dans un véhicule automobile, le dispositif présentant un élément de réglage (6), un moteur (8) relié à l'élément de réglage (6), un moyen de capteur (14) qui relève un paramètre de fonctionnement qui caractérise la charge du moteur (8) et une unité de commande (10) reliée au moteur (8) et au moyen de capteur (14), l'unité de commande (10) étant conçue pour
dans une phase de démarrage, après le branchement du moteur (8), relever l'évolution du paramètre de fonctionnement en fonction d'un paramètre de réglage qui caractérise la course de réglage (S) de l'élément de réglage (6),
déduire une valeur extrême (E) de l'évolution du paramètre de fonctionnement,
déterminer la longueur de la phase d'accélération du moteur (8) à partir de la valeur (n₁) du paramètre de réglage associé à la valeur extrême (E), déduire la longueur de la phase de freinage de la longueur de la phase d'accélération et prédire une valeur de branchement (n₂) du paramètre de réglage qui indique la fin de la phase de freinage et
vérifier la présence éventuelle d'une situation de blocage uniquement après que la valeur de branchement (n₂) de la suite de l'évolution du paramètre de fonctionnement a été atteinte.

10. Dispositif de réglage (4) selon la revendication 9, dans lequel le moyen de capteur (14) est conçu pour relever la vitesse de rotation (N) du moteur (8).

11. Dispositif de réglage (4) selon les revendications 9 ou 10, dans lequel l'unité de commande (10) est conçue pour déduire la valeur extrême (E) par une comparaison incrémentielle des paramètres de fonctionnement relevés à intervalles de temps.

12. Dispositif de réglage (4) selon l'une des revendications 9 à 11, dans lequel l'unité de commande (10) est conçue pour déterminer la valeur de branchement (n₂) à partir de la valeur (n₁) associée à la valeur extrême (E) du paramètre de réglage au moyen d'un facteur de proportionnalité qui relie la longueur de la phase d'accélération à la longueur de la phase de freinage.

13. Dispositif de réglage (4) selon l'une des revendications 9 à 12, dans lequel l'unité de commande (10) est conçue pour prendre en compte l'évolution effectivement relevée du paramètre de fonctionnement pour déterminer la valeur de branchement (n₂).

14. Dispositif de réglage (4) selon l'une des revendications 9 à 13, dans lequel l'unité de commande (10) est conçue pour vérifier et éventuellement corriger la valeur de branchement (n₂) au moyen de la pente de l'évolution.
